# EUROPEAN PATENT SPECIFICATION

(11) **EP 1 053 978 B1**
(45) Date of publication and mention of the grant of the patent: **11.08.2004**
(21) Application number: 00110511.3
(22) Date of filing: 17.05.2000
(51) Int. Cl.: C03B 9/36, C03B 9/16

(54) **Actuating assembly for moving an operating member on a glassware molding machine**
Getriebemechanismus zum Bewegen eines Operationsteils in einer Glasformmaschine
Mécanisme d'entraînement d'une membre opératrice d'une machine de moulage d'objets en verre

(30) Priority: 18.05.1999 IT TO990417
(43) Date of publication of application: 22.11.2000
(73) Proprietor: BOTTERO S.p.A., 12100 Cuneo (IT)
(72) Inventor: Armando, Lorenzo, 12100 Cuneo (IT); Borsarelli, G. Claudio, 12100 Cuneo (IT)
(74) Representative: Eccetto, Mauro

(56) References cited:
- EP-A- 0 134 720
- EP-A- 0 620 195
- GB-A- 2 134 509
- GB-A- 2 141 099
- US-A- 3 472 642

## Description

The present invention relates to an actuating assembly for moving an operating member on a glassware molding machine.

As is known, glassware molding machines comprise a number of molds, each of which has one or more operating members, such as a funnel, plug or blow head, which, during operation of the machine, must be moved, with respect to the molds, between a work position extending in line with the opening of the relative mold, and a rest position away from the relative opening.

Such operating members are moved by means of actuating assemblies comprising a vertical actuating shaft, which is movable axially and rotated about its axis; an actuating head supporting a respective operating member; and a connecting device connecting the actuating head to the actuating shaft.

In most applications, the connecting devices comprise a lever transmission, the levers of which are connected to the actuating shaft and head so as to form an articulated parallelogram transmission.

Though used, known connecting devices of the above type have the drawback of not allowing the angular position of the actuating head, and therefore of the respective operative member, to be adjusted independently of the angular position of the actuating shaft. In other words, currently used connecting devices are rigid, i.e. each designed for a given mold and to move the respective operative member between two predetermined positions with a given fixed law of motion, and therefore cannot be adapted to deal with unforeseen requirements on the machine, such as minor alterations to the law of motion of some of the above members, to prevent them from colliding or interfering with other machine components operating in the same region.

GB-A-2 141 099 discloses a take out mechanism for the transfer of a number of bottles between a fixed gripping position and a fixed release position. The mechanism comprises a carrier turned by a chain transmission.

EP-A-0 134 720 also discloses a take out mechanism in which the carrier is turned by a belt transmission comprising two belts each fixed to two pulleys.

It is an object of the present invention to provide an actuating assembly designed to provide a straightforward, low-cost solution to the aforementioned problems.

According to the present invention, there is provided an actuating assembly for moving an operating member on a glassware molding machine, the assembly comprising an actuating shaft; a fixed straight guide extending parallel to said actuating shaft; a supporting head for supporting said operating member; and supporting and transmission means interposed between said actuating shaft and said supporting head; said supporting and transmission means comprising a supporting arm, in turn comprising an end portion connected in angularly fixed manner to said actuating shaft, and an opposite end portion hinged to said supporting head; characterized in that said supporting and transmission means also comprise a first transmission wheel connected in an angularly fixed position to said guide; a second transmission wheel connected integrally to said head; and angular connecting means for angularly connecting said transmission wheels to each other.

A non-limiting embodiment of the invention will be described by way of example with reference to the accompanying drawings, in which:
Figure 1 shows a side view of a preferred embodiment of the actuating assembly according to the present invention;
Figure 2 shows a larger-scale plan view of the Figure 1 assembly;
Figure 3 shows a larger-scale section, with parts removed for clarity, along line III-III in Figure 2.

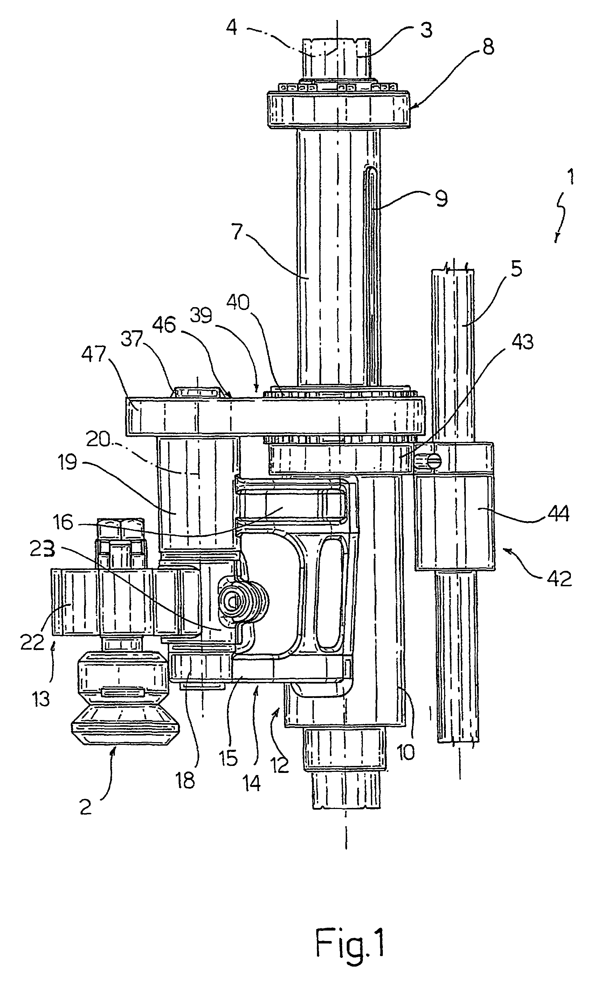

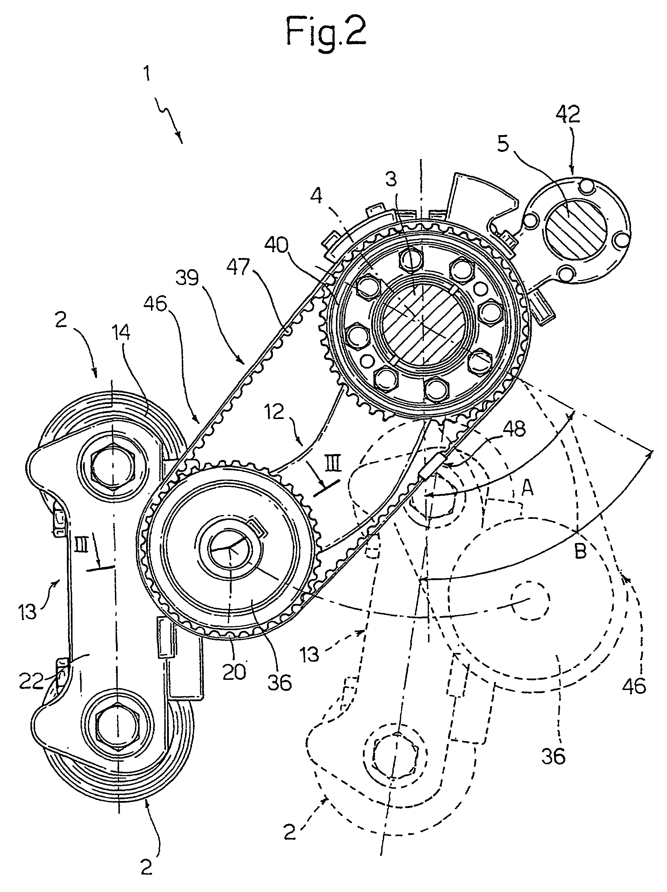

Number 1 in Figures 1 and 2 indicates an actuating assembly for moving known operating members 2, such as funnels, plugs or blow heads, on a machine (not shown) for forming glass articles (not shown).

Assembly 1 comprises an actuating shaft 3 having a respective axis 4 and connected to a known actuating assembly (not shown) for rotating shaft 3 about, and moving shaft 3 along, axis 4. Assembly 1 also comprises a fixed straight guide defined by a rod 5 parallel to shaft 3; and a cylindrical sleeve 7 (Figure 1) extending coaxially with and on the outside of shaft 3, and connected fixedly to shaft 3 by known clamps 8. By means of a key 9 and a known screw tightening device (not shown), sleeve 7 is fitted with a cylindrical tubular body 10 forming the connecting portion of an arm 12 supporting a head 13 for the connection of one or more operating members 2 - in the example shown, two blow heads.

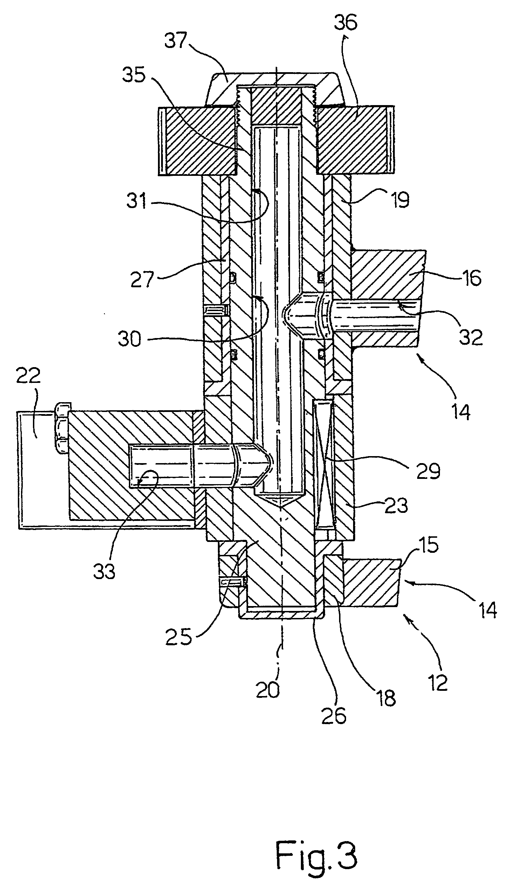

With reference to Figure 1, arm 12 comprises a fork 14 extending crosswise from body 10, and comprising two arms 15 and 16, which terminate with respective cylindrical tubular bodies 18 and 19 separated axially from each other and aligned along a common axis 20 parallel to axis 4. Head 13 comprises a supporting portion 22, to which operating members 2 are connected in known manner not shown; and a tubular connecting portion 23 extending between tubular bodies 18 and 19 and coaxially with axis 20. Connecting portion 23 is hinged to fork 14 by a hinge pin or countershaft 25 (Figure 3) extending, coaxially with axis 20, through portion 23, and connected integrally to portion 23 by a wedge 29 and a known screw tightening device not shown. Pin 25 is also connected in rotary manner and in an axially fixed position to tubular bodies 18 and 19 via the interposition of two bushes 26 and 27 of antifriction material (Figure 3).

With reference to Figure 3, pin 25 forms part of a pneumatic circuit 30 for supplying compressed air to operating members 2. More specifically, circuit 30 comprises a dead hole 31 formed axially inside pin 25, originating at the top end of pin 25 facing clamps 8, and communicating with the outlet of a channel 32 formed inside arm 16 and through bush 27, and the inlet of which communicates with a compressed air source. Hole 31 also communicates with the inlet of a conduit 33 formed inside portions 22 and 23 of head 13 to supply compressed air to operating members 2.

Head 13 is rotated about axis 20 and with respect to arm 12 by pin 25, which has a top end portion 35 projecting upwards beyond tubular body 19 and fitted with a gear 36, which is fitted, preferably frictionally, to portion 35 by means of a ring nut 37 screwed to a threaded end portion of portion 35.

Gear 36 forms part of a belt transmission 39 (Figures 1 and 2), which also comprises an annular gear 40 at the top of tubular body 10 and coaxial with axis 4. Sleeve 7 and respective wedge 9 loosely engage gear 40, which is maintained in an angularly fixed position about axis 4 by a support 42 comprising a connecting collar 43 interposed between gear 40 and body 10 and also engaged loosely by sleeve 7 and respective wedge 9. Gear 40 is fixedly connected in known manner to collar 43, which, in turn, is fixedly connected to a respective sleeve 44 forming part of support 42 and connected in axially-sliding manner to rod 5 to keep collar 43 in an angularly fixed position with respect to axis 4, and to allow collar 43, and hence gear 40, to move along sleeve 7 when tubular body 10 is moved axially.

With reference to Figures 1 and 2, transmission 39 also comprises an endless belt 46 looped about gears 36 and 40 and defined by a toothed belt 47, the end portions of which are connected releasably to each other by a connecting device 48 shown schematically.

In actual use, when shaft 3 is rotated about respective axis 4, head 13 and, consequently, respective members 2 are moved between a work position (shown by the continuous line in Figure 2) in which operating members 2 are each aligned with an opening of a respective mold (not shown), and a rest position (shown by the dash line in Figure 2) in which the operating members are each moved away from the opening. More specifically, as shaft 3 rotates, head 13 is moved by arm 12 along a curved path, and is simultaneously rotated about axis 20 and with respect to arm 12 by transmission 39, the belt 46 of which winds about gear 40, which remains in an angularly fixed position, thus rotating gear 36 and hence pin 25 and head 13 about axis 20.

Taking the work position of head 13 as a fixed reference position, therefore, both the relative rotation of head 13 with respect to the arm as head 13 moves into the rest position, and the position of head 13 in the rest condition, obviously depend on the diameter or the number of teeth of gears 36, 40. More specifically, if gears 36 and 40 have the same number of teeth, then head 13 will move parallel to itself between said positions; conversely, if the number of teeth Z2 of gear 36 is less than the number of teeth Z1 of gear 40, as in the Figure 2 case, head 13, as arm 12 moves into the rest position, will rotate about axis 20 in the opposite direction to the rotation direction of arm 12 and into the Figure 2 rest position, in which head 13 is rotated by an angle B=A(Z1/Z2) , where A is the angle of rotation of actuating shaft 3.

Assembly 1 described therefore obviously provides for setting head 13 to a number of different rest positions by simply varying the number of teeth of gear 36, i.e. by selecting gear 36 from a number of gears, each corresponding to a different rest position of head 13 and the same work position. Unlike known solutions, assembly 1 described is therefore adjustable or reconfigurable according to the machine or the space requirements of the machine to which assembly 1 is fitted.

Once the gears are selected, a further fine adjustment can be made to head 13 by loosening ring nut 37 and rotating gear 36 about axis 20 with respect to pin 25.

As compared with known solutions, assembly 1 described is therefore extremely easy to produce, is highly compact, and is both efficient and reliable, by not requiring the continual maintenance normally required by articulated lever transmissions.

Clearly, changes may be made to assembly 1 as described herein without, however, departing from the scope of the accompanying Claims. In particular, in addition to gears 36 and 40, transmission 39 may comprise one or more further transmission wheels, with or without teeth and used in combination with, or in lieu of, belt 47; gear 36 may be connected to head 13 otherwise than as shown; and gear 40 may be maintained in an angularly fixed position by elements other than those described.

Moreover, head 13 may be provided with a different supporting arm, may be connected differently to the supporting arm, and may be supplied differently with compressed air.

## Claims

1. An actuating assembly (1) for moving an operating member (2) on a glassware molding machine, the assembly (1) comprising an actuating shaft (3); a fixed straight guide (5) extending parallel to said actuating shaft (3); a supporting head (13) for supporting said operating member (2); and supporting and transmission means (12)(19)(39) interposed between said actuating shaft (3) and said supporting head (13); said supporting and transmission means (12) (19) (39) comprising a supporting arm (12), in turn comprising an end portion (10) connected in angularly fixed manner to said actuating shaft (3), and an opposite end portion (18, 19) to which said supporting head (13) is hinged; **characterized in that** said supporting and transmission means (12) (19) (39) also comprise a first transmission wheel (40) connected in an angularly fixed position to said guide (5) and coaxially surrounding said actuating shaft (3); a second transmission wheel (36) connected in an angularly fixed position to said supporting head (13); and angular connecting means (46) for angularly connecting said transmission wheels (36) (40) to each other, said angular connecting means comprising a belt (46) wound about said transmission wheels(36)(40), at least one of which is selectable from a number of wheels having different diameters, so as to determine thereby the change in orientation of the supporting head (13) relative to the supporting arm (12) upon actuation of the actuating shaft (3).

2. An assembly as claimed in Claim 1, **characterized in that** said transmission wheels (36)(40) are gears.

3. An assembly as claimed in Claim 1 or 2, **characterized in that** said belt (46) comprises a belt portion (47); and a connecting device (48) for releasably connecting the end portions of the belt portion (47).

4. An assembly as claimed in any one of the foregoing Claims, **characterized in that** said supporting and transmission means also comprise a countershaft (25) interposed between said supporting head (13) and said second transmission wheel (36).

5. An assembly as claimed in Claim 4, **characterized in that** said supporting head (13) is hinged to said supporting arm (12) by said countershaft (25); further connecting means (35, 37) being provided to connect said second transmission wheel (36) to said countershaft (25).

6. An assembly as claimed in Claim 5, **characterized in that** said further connecting means (35, 37) are releasable connecting means permitting angular adjustment of said second transmission wheel (36) with respect to said countershaft (25).

7. An assembly as claimed in Claim 5 or 6, **characterized in that** said further connecting means (35, 37) comprise a ring nut (37) for forcing said second transmission wheel (36) onto said countershaft (25).

## Patentansprüche

1. Betätigungsanordnung (1) zum Bewegen eines Betriebselements (2) an einer Glasformmaschine, wobei die Anordnung (1) eine Betätigungswelle (3); eine fixierte gerade Führung (5), die sich parallel zu der Betätigungswelle (3) erstreckt; einen Stützkopf (13) zum Abstützen des Betriebselements (2); und Stütz- und Übertragungsmittel (12) (19) (39) aufweist, die zwischen der Betätigungswelle (3) und dem Stützkopf (13) angeordnet sind; wobei die Stütz- und Übertragungsmittel (12)(19)(39) einen Stützarm (12) aufweisen, der seinerseits einen Endabschnitt (10), der in winklig fixierter Weise mit der Betätigungswelle (3) verbunden ist, und einen gegenüberliegenden Endabschnitt (18, 19) aufweist, an welchem der Stützkopf (13) angelenkt ist; **dadurch gekennzeichnet, dass** die Stütz- und Übertragungsmittel (12) (19) (39) auch ein erstes Getrieberad (40), das in einer winklig fixierten Position mit der Führung (5) verbunden ist und koaxial die Betätigungswelle (3) umschließt; ein zweites Getrieberad (36), das in einer winklig fixierten Position mit dem Stützkopf (13) verbunden ist; und Winkelverbindungsmittel (46) zum winkligen Verbinden der Getrieberäder (36)(40) miteinander aufweisen, wobei die Winkelverbindungsmittel einen Riemen (46) aufweisen, der um die Getrieberäder (36) (40) herum gewunden ist, von denen wenigstens eines aus einer Anzahl von Rädern mit verschiedenen Durchmessern auswählbar ist, um dadurch die Änderung der Ausrichtung des Stützkopfes (13) relativ zu dem Stützarm (12) auf die Betätigung der Betätigungswelle (3) zu bestimmen.

2. Anordnung nach Anspruch 1, **dadurch gekennzeichnet, dass** die Getrieberäder (36)(40) Zahnräder sind.

3. Anordnung nach Anspruch 1 oder 2, **dadurch gekennzeichnet, dass** der Riemen (46) einen Riemenabschnitt (47); und eine Verbindungsvorrichtung (48) zum lösbaren Verbinden der Endabschnitte des Riemenabschnitts (47) aufweist.

4. Anordnung nach einem der vorhergehenden Ansprüche, **dadurch gekennzeichnet, dass** die Stütz- und Übertragungsmittel auch eine Gegenwelle (25) aufweisen, die zwischen dem Stützkopf (13) und dem zweiten Getrieberad (36) angeordnet ist.

5. Anordnung nach Anspruch 4, **dadurch gekennzeichnet, dass** der Stützkopf (13) mittels der Gegenwelle (25) an dem Stützarm (12) angelenkt ist; wobei weitere Verbindungsmittel (35, 37) vorgesehen sind, um das zweite Getrieberad (36) mit der Gegenwelle (25) zu verbinden.

6. Anordnung nach Anspruch 5, **dadurch gekennzeichnet, dass** die weiteren Verbindungsmittel (35, 37) lösbare Verbindungsmittel sind, die eine Winkeleinstellung des zweiten Getrieberades (36) in Bezug auf die Gegenwelle (25) erlauben.

7. Anordnung nach Anspruch 5 oder 6, **dadurch gekennzeichnet, dass** die weiteren Verbindungsmittel (35, 37) eine Ringmutter (37) zum Drücken des zweiten Getrieberades (36) auf die Gegenwelle (25) aufweisen.

## Revendications

1. Ensemble actionneur (1) pour déplacer un organe fonctionnel (2) sur une machine de moulage de verrerie, l'ensemble (1) comprenant un arbre d'actionnement (3); un guide rectiligne fixe (5) s'étendant parallèle audit arbre d'actionnement (3); une tête de support (13) pour supporter ledit organe fonctionnel (2); et des moyens de support et de transmission (12) (19) (39) intercalés entre ledit arbre d'actionnement (3) et ladite tête de support (13); lesdits moyens de support et de transmission (12) (19) (39) comprenant un bras de support (12), comprenant lui-même une partie d'extrémité (10) couplée d'une manière angulairement fixe audit arbre d'actionnement (3), et une partie d'extrémité opposée (18, 19) à laquelle est articulée ladite tête de support (13); **caractérisé en ce que** lesdits moyens de support et de transmission (12) (19) (39) comprennent aussi une première roue de transmission (40) couplée dans une position angulaire fixe audit guide (5) et entourant de façon coaxiale ledit arbre d'actionnement (3); une deuxième roue de transmission (36) couplée dans une position angulaire fixe à ladite tête de support (13); et des moyens de couplage angulaire (46) pour coupler angulairement lesdites roues de transmission (36) (40) l'une à l'autre, lesdits moyens de couplage angulaire comprenant une courroie (46) enroulée autour desdites roues de transmission (36) (40), dont au moins une peut être choisie parmi un certain nombre de roues ayant différents diamètres pour déterminer de ce fait le changement d'orientation de la tête de support (13) par rapport au bras de support (12) lors de l'actionnement de l'arbre d'actionnement (3).

2. Ensemble selon la revendication 1, **caractérisé en ce que** lesdites roues de transmission (36) (40) sont des pignons.

3. Ensemble selon la revendication 1 ou 2, **caractérisé en ce que** ladite courroie (46) comprend une partie courroie (47); et un dispositif de couplage (48) pour coupler de manière libérable les extrémités de la partie courroie (47).

4. Ensemble selon l'une quelconque des revendications précédentes, **caractérisé en ce que** lesdits moyens de support et de transmission comprennent aussi un arbre intermédiaire (25) intercalé entre ladite tête de support (13) et ladite deuxième roue de transmission (36).

5. Ensemble selon la revendication 4, **caractérisé en ce que** ladite tête de support (13) est articulée audit bras de support (12) par ledit arbre intermédiaire (25); d'autres moyens de couplage (35, 37) étant prévus pour coupler ladite deuxième roue de transmission (36) audit arbre intermédiaire (25).

6. Ensemble selon la revendication 5, **caractérisé en ce que** lesdits autres moyens de couplage (35, 37) sont des moyens de couplage libérable permettant un réglage angulaire de ladite deuxième roue de transmission (36) par rapport audit arbre intermédiaire (25).

7. Ensemble selon la revendication 5 ou 6, **caractérisé en ce que** lesdits autres moyens de couplage (35, 37) comprennent un écrou à oeil (37) pour pousser ladite deuxième roue de transmission (36) sur ledit arbre intermédiaire (25).
